# NEW EUROPEAN PATENT SPECIFICATION

(11) **EP 0 636 442 B2**
(45) Date of publication and mention of the opposition decision: **27.12.2006**
(45) Mention of the grant of the patent: 24.10.2001
(21) Application number: 94110084.4
(22) Date of filing: 29.06.1994
(51) Int. Cl.: B23B 27/04, B23B 27/10, B23Q 1/00

(54) **A metal cutting tool**
Ein Metallschneidewerkzeug
Un outil de coupe pour métaux

(30) Priority: 30.07.1993 IL 10653793
(43) Date of publication of application: 01.02.1995
(73) Proprietor: Iscar Ltd., 24959 Tefen (IL)
(72) Inventor: Wertheim, Rafael, Qiryat Bialik 27000 (IL)
(74) Representative: Vossius & Partner

(56) References cited:
- EP-A- 0 100 376
- EP-A- 0 507 250
- EP-A- 0 534 450
- DE-A- 3 004 166
- DE-A- 3 033 626
- DE-U- 1 708 871
- FR-A- 1 115 922
- FR-A- 1 229 583
- US-A- 3 798 725

## Description

This invention relates to a metal cutting tool according to the preamble of claim 1 and as known from EP-A-0 534 450.

With such metal cutting tools, the cutting edge of the insert is defined between a rake surface thereof and a relief flank or clearance face and, in use, the cutting edge and the portion of the relief flank adjacent thereto, become rapidly worn and the insert must therefore be frequently replaced or reversed so as to index a fresh cutting edge in position.

Wear of the relief flank starts at the cutting edge itself and progressively extends downwardly in the direction of the base of the cutting insert. It is known that once the extent or depth of the worn region, as measured from the cutting edge, exceeds a certain magnitude, the continued use of that existing edge of the cutting tip deleteriously affects the cutting operation. As a consequence, cutting insert manufacturers specify for each particular type of cutting insert a prescribed maximum depth of flank wear (generally referred to as VBₘₐₓ) after which the cutting insert should be replaced or indexed.

It is well-known that one of the factors which influences flank wear is the hardness of the insert material. Thus, the harder the material the less will be the rate of wear and the longer the cutting insert can be used before wear has reached VBₘₐₓ requiring replacement However, this hardness is directly related to the working temperature and with rise of working temperature there is an associated reduction in hardness, with a consequent increase in the rate of wear.

It is for this reason that, in the use of such cutting tools, means have been provided for the fluid cooling of the cutting insert in the region of the cutting edge thereof.

In one known method of fluid cooling, the upper surface of the cutting insert is sprayed with a coolant fluid but it is found that the continued movement of the chip over the rake surface of the cutting insert disturbs the effective cooling of the insert by the coolant.

In another known method of cooling; a coolant is passed through the cutting insert from the base thereof to the upper rake surface. It is found in practice, however, that the pressure of the chip on the upper rake surface prevents the coolant from effectively reaching the region of the cutting edge, and here again the efficiency of cooling is limited.

A further method which has been employed has been to direct a coolant through a duct formed in the cutting insert or cutting tip, which duct emerges from an aperture in the relief flank of the cutting insert. It is found, however, that in order to ensure effective distribution of the coolant liquid around the relief flank and in the vicinity of the cutting edge, a number of such coolant ducts must be provided and this, in turn, leads to a significant weakening of the cutting insert. Furthermore, the penetration of the coolant is hindered by the narrow gap between the relief flank and the workpiece.

It has also been proposed to direct a jet of a coolant liquid into the space between the relief flank and the workpiece, but this method is of very limited value, particularly when the tool involved is a grooving or parting tool, seeing that the region between the relief flank and the workpiece is of extremely limited accessibility as compared with a turning tool.

DE-U-17 08 871 discloses a cutting tool with a cutting insert and a coolant flow channel having an outlet so that a coolant outflow from said outlet is directed upwardly to the cutting insert.

DE-A-30 33 626 describes a cutting tool with a cutting insert. The cutting tool has coolant flow channels having outlets oriented so that the coolant outflow from said outlets is directed to the cutting edge of the insert.

With a view to overcoming some of these disadvantages, it has been proposed in our prior co-pending Patent Application EP-A-0 534 450, hereinafter "our prior application", to provide a metal cutting tool having a metal cutting insert with at least one cutting edge defined between a rake face and a relief flank and at least one recess formed in the relief flank and constituting a coolant channel extending towards said cutting edge and being spaced therefrom by a spacing which is not less than a prescribed permissible depth of flank wear VBₘₐₓ of the cutting insert.

With such a cutting tool, coolant is directed into the coolant channel formed in the relief flank of the insert and is thus guided to and concentrated in the region of expected flank wear. Thus, cooling takes place in the region of the cutting insert where it is most required and, in this way, the rate of flank wear is significantly reduced. This, in turn, reduces the frequency with which cutting inserts have to be replaced when the wear thereof has reached the maximum permissible level.

In one particular embodiment in accordance with our prior application, the recess extends from and through the base of the insert and communicate with the outlet of a fluid coolant duct formed in the insert holder.

It will be realized, however, that this proposal in accordance with our prior application involves the use of a special cutting insert in which is formed the required recess in the relief flank, this in addition to the provision of an insert holder formed with the required coolant duct.

It is an object of the present invention to provide a new and improved cutting tool which incorporates a standard cutting insert but wherein the relief flank is subjected to effective cooling.

This object is achieved with a cutting tool according to the claims.

According to the present invention there is i.a. provided a metal cutting tool according to claim 1.

Preferably, the cutting tool is a parting or cutoff tool whilst the cutting insert is formed with a wedge-shaped body portion which is wedge clamped within a correspondingly wedge-shaped recess defined by the clamping jaws of the insert holder.

The coolant emerging from the outlet formed in the insert holder is directed along the face of the relief flank reaching the cutting edge of the insert and the adjacent region of the workpiece. In this way, effective cooling of the sensitive region at and near the cutting edge is effected without the necessity of using specially designed cutting inserts.

Various embodiments of metal cutting tools will now be described by way of example and with reference to the accompanying drawings, in which:
**Fig. 1** is a side elevation of a portion of one general form of cutting tool, juxtaposed with reference to workpiece;
**Fig. 2** is a plan view from above of the cutting tool and workpiece shown in Fig. 1;
**Fig. 3** is a side elevation of a portion of a cutting insert holder of a cutting tool;
**Fig. 4** is a longitudinally sectioned view of a portion of a cutting insert holder used in an embodiment of a cutting tool in accordance with the present invention; and
**Fig. 5** is a font elevation of the cutting insert holder shown in Fig. 4.

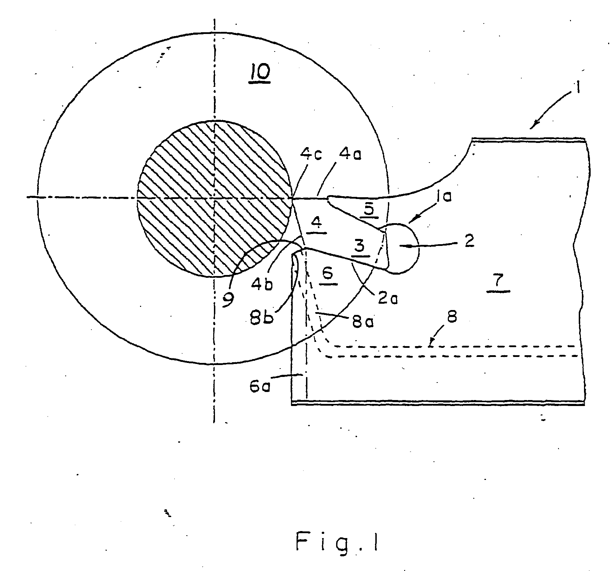

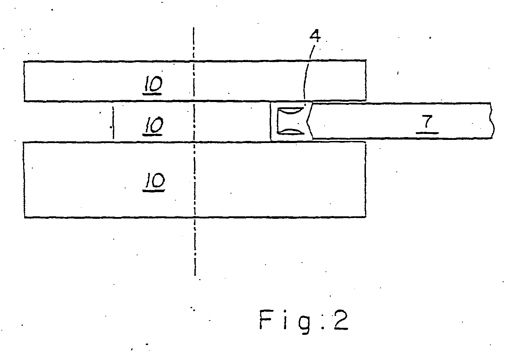

Figs. 1 and 2 only show a cutting tool and a workpiece in general.

As seen in Figs. 1 and 2 of the drawings, a cutting tool (1), which is here shown in a parting operation, comprises a cutting insert (2) having a wedge-shaped body portion (3) and a cutting head portion (4). The cutting insert (2) is clampingly retained between upper and lower clamping jaws (5, 6) of a cutting insert holder (7). These clamping jaws (5, 6) define between them a wedge-shaped recess (1a) within which is wedge clamped the body portion of the cutting insert (2). The cutting insert (2) shown by way of example is sold under the trademark SELF-GRIP^{™} and is of the GFN type manufactured by Iscar, Ltd. The insert holder (7) is also of the same general type of insert holder used with SELF-GRIP^{™} tools but is distinguished therefrom in that there is formed integral with the lower jaw (6) a projecting portion (6a) which, as can be seen, extends beyond a base (2a) of the insert (2).

The cutting head portion (4) of the insert (2) is formed with an upper rake surface (4a) and a front relief flank surface (4b) which define between them a cutting edge (4c).

Formed in the insert holder (7) is an elongated coolant duct (8) having an inlet (not shown) adapted to be coupled to a coolant fluid source. A downstream portion (8a) of the coolant duct (8) is disposed substantially parallel to the relief flank surface (4b) of the cutting insert (2) and emerges from the insert holder (7) via an outlet (8b) formed in a (second) bevelled portion (9) of the upper surface of the projecting portion (6a).

A first bevelled portion formed in a front end surface of the projecting portion (6a) is not shown in Fig.1.

It will be readily seen that coolant fluid emerging from the coolant duct (B) is directed upwardly along the relief flank surface (4b) so as to reach the cutting edge (4c) and the adjacent portions of a workpiece (10). It will be readily seen from Fig. of the drawings that, in effect, the cooling fluid is contained between the walls of the workpiece being parted and the relief flank surface (4b) of the cutting insert (2). In this way, it is ensured that the relief flank surface (4b) and, in particular, those portions thereof immediately adjacent the cutting edge (4c), are effectively cooled and in this way the wear rate of the cutting edge (4c) and the upper portion of the relief flank (4b) is considerably reduced.

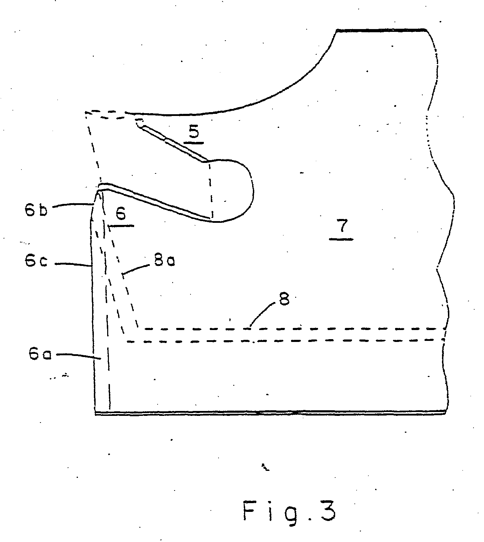

In Fig. 3 of the drawings, the outlet of the coolant duct is formed in a bevelled portion (6b) of a front end surface (6c) of the projecting portion (6a) of the insert holder (7).

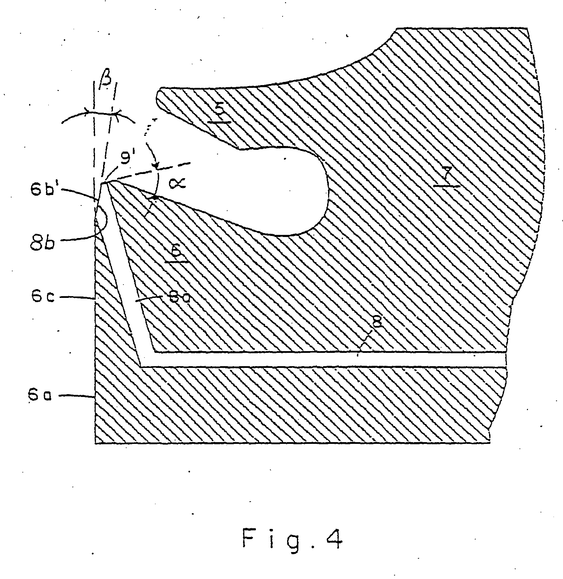

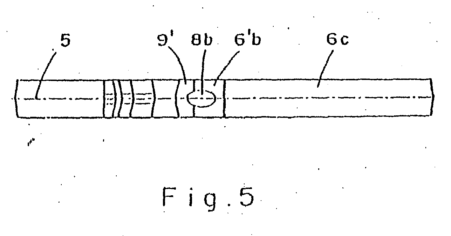

In an embodiment shown in Figs. 4 and 5 of the drawings, the outlet (8b) of the coolant duct extends to both an upper, bevelled portion (6b') of the front end of the projecting portion (6a) of the insert holder (7), as well as to the bevelled portion (9') of the upper surface of the projecting portion (6a).

In the embodiment just described, the outlet of the coolant duct is to be found in bevelled portions of the upper regions of the projecting portion (6a) of the insert holder (7). The provision of such bevelling is advantageous as it reduces any limitation which may otherwise arise on the maximum diameters which can be grooved or parted as a consequence of the extension in the length of the insert holder. Furthermore, the provision of such bevelling is also advantageous in ensuring the effective direction of the coolant over the entire relief flank surface.

As shown in Fig. 4 of the drawings, the upper bevelled portion (6b') of the holder (7) defines an angle β with respect to the remainder of the front end surface (6c) of the projecting portion (6a), whilst the bevelled portion (9') of the upper surface of the projecting portion (6a) defines an angle α with respect to the clamping surface of the lower clamping jaw (6). Angles α and β may range from 0° to 30°.

Whilst the invention has been particularly described with reference to a wedge-clamped cutting insert, it will be readily appreciated that the invention can be equally well applied to cutting inserts which are clamped in a differing manner between respective clamping jaws.

## Claims

1. A metal cutting tool comprising an exchangeable cutting insert (2) having a body portion (3) and a cutting head portion (4), said cutting head portion comprising an upper rake surface (4a) and a front relief flank surface (4b), defining between them a cutting edge (4c); and a cutting insert holder (7) formed with a pair of clamping jaws (5,6) releasably clamping said insert in said holder, a first (5) of said clamping jaws contacting said insert (2) adjacent said rake surface (4a) and a second (6) of said clamping jaws supporting a base (2a) of the insert;
wherein said second clamping jaw (6) is formed with a projecting portion (6a) extending beyond said base (2a); said projecting portion has a front end surface (6c) with a bevelled portion (6b), a coolant flow channel (8) is formed in said holder (7) having an inlet adapted to be coupled to a coolant flow supply, a downstream portion (8a) of said channel (8) has an outlet (8b) which is formed at least in part in said bevelled portion (6b) and so formed that a coolant outflow from said outlet (Bb) is directed substantially parallel to said relief surface (4b),
**characterized in that** said front relief flank surface (4b) is substantially planar and
said bevelled portion (6b) of said holder (7) defines an angle (β) with respect to the remainder of said front end surface (6c) ranging from 0° to 30°
wherein the second clamping jaw (6) comprises an upper surface with a second bevelled portion (9') adjacent said bevelled portion (6b) whilst the bevelled portion (9') of the upper surface of the projecting portion (6a) defines an angle (α) with respect to the clamping surface of the second clamping jaw (6) and wherein the outlet (8b) is formed in the second bevelled portion (9').

2. A metal cutting tool according to Claim 1, wherein said downstream portion (8a) is directed substantially parallel to said relief flank surface (4b).

3. A metal cutting tool according to Claim 1 or 2, wherein said body portion (3) of said cutting insert (2) is wedge-shaped and wherein said clamping jaws (5, 6) define correspondingly a wedge-shaped recess (1a).

4. A metal cutting tool according to Claim 1 or 3, wherein said tool is adapted for use in such cutting operations during which the cutting edge and the relief flank of the insert are confined, at two sides thereof, with walls of a workpiece being cut so that the coolant fluid outflow emerging, from said outlet is contained between the walls of the workpiece and the relief flank surface of the insert.

5. A metal cutting tool according to any one of the preceding claims wherein the angle (α) at which the second bevelled portion (9') is bevelled with respect to the upper surface of the second clamping jaw (6) is in the range from 0°to 30°.

## Patentansprüche

1. Metallschneidwerkzeug mit einem austauschbaren Schneideinsatz (2), der einen Körperabschnitt (3) und einen Schneidkopfabschnitt (4) hat; wobei der Schneidkopfabschnitt eine obere Spanfläche (4a) und eine vordere Freiflankenfläche (4b) aufweist, die zwischen sich eine Schneidkante (4c) bilden; und einem Schneideinsatzhalter (7), der mit einem Paar Spannbacken (5, 6) gebildet ist, die den Einsatz im Halter lösbar einspannen, wobei eine erste (5) der Spannbacken den Einsatz (2) benachbart zur Spanfläche (4a) berührt und eine zweite (6) der Spannbacken eine Basis (2a) des Einsatzes stützt;
wobei die zweite Spannbacke (6) mit einem Vorsprungabschnitt (6a) gebildet ist, der sich über die Basis (2a) hinaus erstreckt, der Vorsprungabschnitt eine vordere Endfläche (6c) mit einem abgeschrägten Abschnitt (6b) hat, ein Kühlmitteldurchflußkanal (8) im Halter (7) gebildet ist und einen Einlaß hat, der geeignet ist, mit einer Kühlmitteldurchflußquelle gekoppelt zu sein, ein stromabwärts befindlicher Abschnitt (8a) des Kanals (8) einen Auslaß (8b) hat, der mindestens teilweise im abgeschrägten Abschnitt (6b) gebildet und so geformt ist, daß ein aus dem Auslaß (8b) ausfließendes Kühlmittel im wesentlichen parallel zur Freifläche (4b) geleitet wird, **dadurch gekennzeichnet, daß** die vordere Freiflankenfläche (4b) im wesentlichen eben ist, und
der abgeschrägte Abschnitt (6b) des Halters (7) einen Winkel (β) zum Rest der vorderen Endfläche (6c) im Bereich von 0° bis 30° bildet, wobei die zweite Spannbacke (6) eine Oberseite mit einem zweiten abgeschrägten Abschnitt (9') benachbart zum abgeschrägten Abschnitt (6b) aufweist, während der abgeschrägte Abschnitt (9') der Oberseite des Vorsprungabschnitts (6a) einen Winkel (α) zur Spannfläche der unteren Spannbacke (6) bildet und wobei der Auslaß (8b) in dem zweiten abgeschrägten Abschnitt (9') ausgebildet ist.

2. Metallschneidwerkzeug nach Anspruch 1, wobei der stromabwärts befindliche Abschnitt (8a) im wesentlichen parallel zur Freiflankenfläche (4b) gerichtet ist.

3. Metallschneidwerkzeug nach Anspruch 1 oder 2, wobei der Körperabschnitt (3) des Schneideinsatzes (2) keilförmig ist und wobei die Spannbacken (5, 6) entsprechend eine keilförmige Aussparung (1a) bilden.

4. Metallschneidwerkzeug nach Anspruch 1 oder 3, wobei das Werkzeug zum Gebrauch in solchen Schneidvorgängen geeignet ist, bei denen die Schneidkante und die Freiflanke des Einsatzes an zwei Seiten davon durch Wände eines geschnittenen Werkstücks so eingeschlossen sind, daß das ausfließende Kühlfluid, das aus dem Auslaß austritt, zwischen den Wänden des Werkstücks und der Freiflankenfläche des Einsatzes enthalten ist.

5. Metallschneidwerkzeug nach einem der vorstehenden Ansprüche, wobei der Winkel (α), in dem der zweite abgeschrägte Abschnitt (9') zur Oberseite der zweiten Spannbacke (6) abgeschrägt ist, im Bereich von 0° bis 30° liegt.

## Revendications

1. Outil de coupe pour métaux comprenant une plaquette de coupe échangeable (2) comportant une portion de corps (3) et une portion de tête de coupe (4), ladite portion de tête de coupe comprenant une surface de coupe supérieure (4a) et un flanc avant de dépouille (4b), délimitant entre elles une arête de coupe (4c) ; et un support de plaquette de coupe (7) formé avec une paire de mâchoires de serrage (5, 6) serrant de façon amovible ladite plaquette dans ledit support, une première (5) desdites mâchoires de serrage étant en contact avec ladite plaquette (2) au voisinage de ladite surface de coupe (4a) et une seconde (6) desdites mâchoires de serrage supportant une base (2a) de la plaquette;
ladite seconde mâchoire de serrage (6) étant formée avec une portion en saillie (6a) s'étendant au-delà de ladite base (2a) ; ladite portion en saillie comportant une surface d'extrémité avant (6c) avec une portion en biseau (6b), un canal d'écoulement de produit de refroidissement (8) étant ménagé dans ledit support (7) comportant une entrée adaptée pour être couplée à une alimentation en produit de refroidissement, une portion aval (8a) dudit canal (8) comportant une sortie (8b) qui est ménagée au moins en partie dans ladite portion en biseau (6b) et formée de telle façon que le produit de refroidissement s'écoulant par ladite sortie (8b) soit dirigé sensiblement parallèlement à ladite surface de dépouille (4b),
**caractérisé en ce que** ladite surface de flanc avant de dépouille (4b) est sensiblement plane et
ladite portion en biseau (6b) dudit support (7) forme un angle (β) compris entre 0° et 30° par rapport au reste de ladite surface d'extrémité avant (6c),
la seconde mâchoire de serrage (6) comprenant une surface supérieure avec une seconde portion en biseau (9') adjacente à ladite portion en biseau (6b), tandis que la portion en biseau (9') de la surface supérieure de la portion en saillie (6a) forme un angle (α) par rapport à la surface de serrage de la seconde mâchoire de serrage (6) et dans lequel la sortie (8b) est formée dans la seconde portion en biseau (9').

2. Outil de coupe pour métaux selon la revendication 1, dans lequel ladite portion d'aval (8a) est dirigée sensiblement parallèlement à ladite surface de flanc de dépouille (4b).

3. Outil de coupe pour métaux selon la revendication 1 ou 2, dans lequel ladite portion de corps (3) de ladite plaquette de coupe (2) est en forme de coin et dans lequel lesdites mâchoires de serrage (5, 6) délimitent un évidement ayant une forme de coin correspondante (1a).

4. Outil de coupe pour métaux selon la revendication 1 ou 3, dans lequel ledit outil est adapté pour l'utilisation dans les opérations de coupe pendant lesquelles l'arête de coupe et le flanc de dépouille de la plaquette sont enfermés, des deux côtés de celui-ci, entre des parois d'une pièce à découper de sorte que le fluide de refroidissement s'écoulant par ladite sortie est contenu entre les parois de la pièce à travailler et la surface de flanc de dépouille de la plaquette.

5. Outil de coupe pour métaux selon l'une quelconque des revendications précédentes, dans lequel l'angle (α) d'inclinaison de la seconde portion en biseau (9') par rapport à la surface supérieure de la seconde mâchoire de serrage (6) est compris entre 0° et 30°.
